Europäisches Patentamt

European Patent Office

Office européen des brevets

(11) Veröffentlichungsnummer: **0 231 825**
**A2**

(12) **EUROPÄISCHE PATENTANMELDUNG**

(21) Anmeldenummer: **87100884.3**

(22) Anmeldetag: **22.01.87**

(51) Int. Cl.⁴: **A23P 1/12 , A23K 1/00**

(30) Priorität: **04.02.86 DE 3603279**

(43) Veröffentlichungstag der Anmeldung:
**12.08.87 Patentblatt 87/33**

(84) Benannte Vertragsstaaten:
**AT BE CH DE ES FR GB GR IT LI LU NL SE**

(71) Anmelder: **Walter, Ulrich**
**Asternweg 17**
**D-4020 Mettmann 2(DE)**

(72) Erfinder: **Walter, Ulrich**
**Asternweg 17**
**D-4020 Mettmann 2(DE)**

(74) Vertreter: **Patentanwaltsbüro Cohausz &**
**Florack**
**Postfach 14 01 47**
**D-4000 Düsseldorf 1(DE)**

(54) **Verfahren und Vorrichtung zum Herstellen von Tierfutter oder Lebensmitteln.**

㉗ Die Erfindung betrifft ein Verfahren zum Herstellen von Tierfutter oder Lebensmitteln durch Aufschließen pflanzlicher und/oder tierischer Rohstoffe wie Körner, Bohnen oder Fischmehl, insbesondere in Futter-oder Lebensmittelmischungen unter Verwendung eines Extruders. Der pflanzliche und/oder tierische Rohstoff wird bei einer Feuchtigkeit von 10 bis 40, insbesondere von 12 bis 30 Prozent und einer Temperatur von 30 bis 150, insbesondere von 50 bis 120 Grad Celsius, vorbehandelt und danach einem mehrstufigen Extruder (14) zugeführt. Nach einem Zerhacken wird das Produkt zu einer Trocknungs- und/oder Kühlstation 18, 19) transportiert.

EP 0 231 825 A2

## Verfahren und Vorrichtung zum Herstellen von Tierfutter oder Lebensmitteln

Die Erfindung betrifft ein Verfahren zum Herstellen von Tierfutter oder Lebensmitteln durch Aufschließen pflanzlicher und/oder tierischer Rohstoffe wie Körner, Bohnen oder Fischmehl, insbesondere in Futter-oder Lebensmittelmischungen unter Verwendung eines Extruders.

Es ist bekannt, zur Herstellung von Futter für Haustiere, insbesondere für Hunde und Katzen Extruder zu verwenden. Die hierzu benutzten Extruder haben einen sehr hohen Energiebedarf, der die Kosten für das Futter erheblich beeinflußt. Dies kann zwar bei Hunde-und Katzenfutter aufgrund des verhältnismäßig hohen Endpreises hingenommen werden, ist aber für Futter, das in landwirtschaftlichen Betrieben verwendet wird, ein unangenehmer Kostenfaktor. Darüberhinaus erfordern die bisherigen Verfahren aufwendige Bearbeitungsprozesse mit mehreren getrennten Bearbeitungsvorrichtungen, die nicht nur teuer, sondern auch zeit- und arbeitsaufwendig sind. Auch kann die hygienische Qualität des bekannten Futters an den bekannten Vorrichtungen mangelhaft sein.

Aufgabe der Erfindung ist es, ein Verfahren und eine Vorrichtung zum Herstellen von Tierfutter oder Lebensmitteln zu schaffen, die bei geringem Energiebedarf und kleiner und preiswerter Bauweise ein Tierfutter oder Lebensmittel hoher Qualität schafft.

Diese Aufgabe wird erfindungsgemäß dadurch gelöst, daß der pflanzliche und/oder tierische Rohstoff bei einer Feuchtigkeit von 10 bis 40, insbesondere von 12 bis 30 Prozent und einer Temperatur von 30 bis 150, insbesondere von 50 bis 120 Grad Celsius vorbehandelt, danach einem mehrstufigen Extruder zugeführt wird und nach einem Zerhacken zu einer Trocknungs-und/oder Kühlstation transportiert wird.

Bei diesem Verfahren werden mehrere Verfahrensschritte in einer einzigen Vorrichtung bzw. einem einzigen Prozeßgerät in einer geschickten Weise miteinander kombiniert, wodurch nicht nur Investitionskosten, sondern auch Energie- und Personalkosten eingespart werden. Das Verfahren läßt es zu, daß eine optimale Steuerung erreicht wird, so daß die eingebrachte mechanische und thermische Energie besonders gut genutzt wird. Auch kommt es zu einer erheblichen Reduzierung der Keimzahlen (Schimmel, Hefen, Bakterien) und der Wirkung von Hemmstoffen. Ferner werden unerwünschte Spurenstoffe ausgetrieben und Enzyme inaktiviert. Neue spezifische Aromastoffe werden gebildet und die Lagerfähigkeit erhöht. Die Stärke wird aufgeschlossen.

Besonders vorteilhaft ist es, wenn der Rohstoff vom Extruder zur Trocknungs-und/oder Kühlstation durch ein Fördergebläse transportiert wird. Hierbei kann das Fördergebläse von der Extruderaußenseite erwärmte Luft ansaugen, die während des Weitertransports und insbesondere in der Trocknungsstation das behandelte Gut trocknet. Das Nutzen dieser vom Extruder erzeugten Warmluft führt zu einer besonders hohen Energieeinsparung.

Interessant wird diese neue Technik durch konsequente Einsparung von Aufwand an Schnittstellen dieser Verfahrenstechnik:
-eine vorgeschaltete Mühle kann entfallen
-der Austrag aus dem Langzeitkonditioneur ist gleichzeitig Dosierung für den Extruder
-das extrudierte Produkt wird direkt nach dem Austritt durch einen Mahl-, Trocken-, Kühl-oder Förder-Ventilator der weiteren konventionellen Verarbeitungsstufe zugeführt.

Die hydrothermische Vorbehandlung der Rohstoffe im Vorkonditioneur nimmt dem Extruder Aufgaben ab, die nicht in solch aufwendigen Maschinen stattfinden müssen.

Die besonders einfache Konstruktion des Extruders trägt maßgeblich zur erwartenden Wirtschaftlichkeit der Anlage bei.

Für eine Vorrichtung zum Durchführen des Verfahrens wird vorgeschlagen, daß alle das Verfahren ausführenden Behandlungsstationen von einer einzigen Anlage gebildet werden, die eine ununterbrochene Behandlungsstrecke aufweist. Eine solche zusammenhängende Vorrichtung kann von kompakter, platzsparender Bauweise sein und führt zu geringen Transportwegen und einem kleinen Bedienungsaufwand.

Besonders vorteilhaft ist es, wenn vor dem Extruder ein Zwischenspeicher angeordnet ist, in den Dampf und/oder Wasser eingeführt wird. Ein solcher Zwischenspeicher erlaubt eine intensive hydrothermische Langzeit-Vorbehand-lung, ehe die Rohstoffe zum Extruder gelangen. Konstruktiv besonders einfach und von genügender Wirksamkeit ist es, wenn der Zwischenspeicher einen Heizboden aufweist. Ferner wird hierbei vorgeschlagen, daß dem Zwischenspeicher die Rohstoffe oder Mischungen über einen Durchlaufmischer aufbereitet und zugeführt werden. Auch kann zwischen dem Extruder und dem Zwischenspeicher eine Dosierschnecke angeordnet sein.

Eine hohe und intensive Arbeitsleitung wird dann erreicht, wenn dem Extruder das Gut über eine Stopfschnecke zugeführt wird. Hierzu wird auch vorgeschlagen, daß der Extruder das Gut durch eine Matritze drückt, hinter der ein Zerhackermesser rotiert. Konstruktiv besonders einfach ist es, wenn Gebläserad und Zerhackermesser auf derselben angetriebenen Welle befestigt sind.

Eine besonders intensive Behandlung des Rohstoffs im Extruder und eine besonders exakte Behandlungssteuerung ist dadurch erreichbar, daß in den Extruder Dampf und Wasser eingebbar ist. Hierzu wird auch vorgeschlagen, daß Schnecke und/oder Druckringe des Extruders durch Austausch veränderbar sind.

Vorzugsweise wird vorgeschlagen, daß der Extruder eine Schnecke mit einem Durchmesser von 200 mm aufweist. Dies führt dazu, daß eine Vorzerkleinerung entfallen kann. Diese Schnecke mahlt das Gut während des Extrudiervorganges. Das Endprodukt tritt schaumartig aus der Schnecke aus, wenn es genügend Stärke enthält.

Schaltet man eine einfache Ventilatormühle der Schnecke nach, läßt sich das Produkt leicht pulverisieren in Verbindung mit dem Kühlen und gleichzeitig pneumatischer Förderung zur nächsten Arbeitsstation.

Es lassen sich mehrere notwendige Effekte in einer Maschine kostengünstig zusammenfassen.

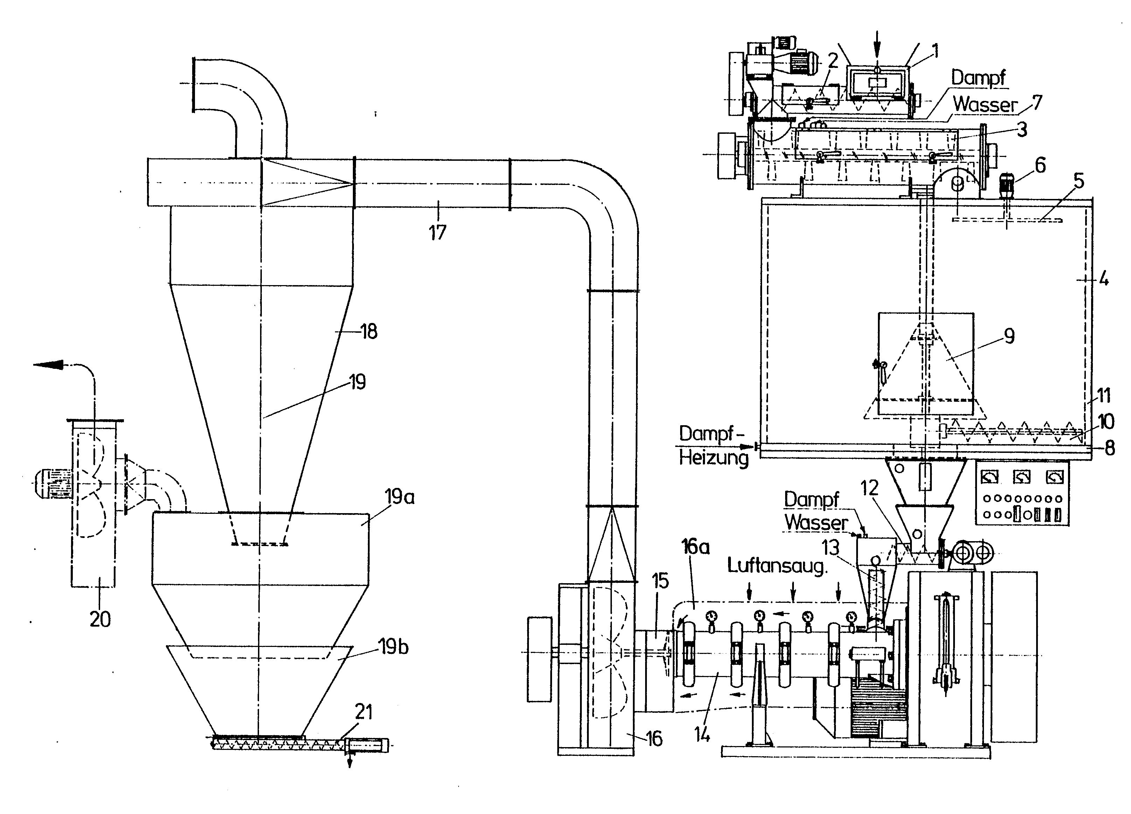

Ein Ausführungsbeispiel einer das Verfahren durchführenden Vorrichtung ist in der Zeichnung in einer Seitenansicht dargestellt und wird im folgenden näher beschrieben.

Kern des Verfahrens bildet ein Extruder mit einer Schnecke großen Durchmessers und mehreren hintereinandergeschalteten Stufen kombiniert mit Druckringen. Sie arbeitet so intensiv bei relativ trockenem Produkt, daß sich das Produkt stufenweise auf Endtemperaturen -einstellbar von 100 bis 200°C -erhitzt. Dabei findet ein kurzzeitiger Hochdruck-Kochprozeß von weniger als 30 Sekunden mit folgenden Wirkungen auf das Produkt statt:
-Aufschluß von Stärke. Sowohl der Mensch als auch viele Tierarten (Fisch, Schwein, Katze, Hund ...) nutzen den Nährwert der Stärke vollständiger, wenn sie gekocht ist. Vorgetrocknete trockene Pulver lassen sich lange lagern und bei Zugabe von Wasser unmittelbar verzehren (Instantprodukte).
-Inaktivierung von Enzymen durch Temperatureinwirkung zur Verlängerung von Lagerfähigkeit von Nahrungsrohstoffen.
-Reduzierung der Wirkung von Hemmstoffen - (bewirken Verdauungsstörungen) in speziellen Futter-und Lebensmittelrohstoffen (Soja: Trypsininhibitor ...).
-Mechanischer Aufschluß der inneren Struktur von Nahrungsmittelrohstoffen. Hierbei geht es bevorzugt um die Zerkleinerung der Zellstruktur in pflanzlichen Rohstoffen. Beispielsweise wird das Fett von ölhaltigen Samen besser von Mensch und Tier verwertet, wenn es nicht mehr am Austritt in die Verdauungssäfte durch geschlossene Zellwände behindert wird.
-Reduzierung des Gehaltes an Keimen (Schimmel, Hefen, Bakterien) in den Produkten für die menschliche und tierische Ernährung. Dies kann längerfristig im Einsatzbereich dieses Futters zur Reduzierung des Medikamentengehaltes im Futter führen.
-Austreiben von unerwünschten Spurenstoffen, die im Rahmen der Insektenbekämpfung in den Rohstoff, zumeist unkontrolliert im Ausland, gekommen sind.
-Aufbau einer Endstruktur, die sich leicht feinzerkleinern läßt und die auch anwendungstechnische Vorteile bietet. Stärkehaltige Produkte "blähen" am Austritt des Extruders schaumartig auf und verfestigen in dem Zustand (Beispiel Knabbergebäck). Dies ist interessant für Fischfutter, da es so zum Füttern leicht auf dem Wasser schwimmt (geringe Sinkfähigkeit) und Sedimentationsverluste vermieden werden.
-Denaturierung von Eiweißen und Vitaminen. Durch zu starke Wärmebehandlung kann im Eiweiß beispielsweise die Verfügbarkeit der für die Ernährung wichtigen Aminosäure Lysin reduziert werden. Ebenfalls wird der aktive Gehalt an Vitaminen reduziert. Hier ist ein vernünftiger Kompromiß bei den Behandlungsbedingungen im Verfahren zu finden.
-Bildung neuer spezifischer Aromastoffe, Reduzierung der Naturaromen der Rohstoffe. Im Tierfutterbereich ist die Bildung neuer Aromastoffe erwünscht und überwiegt. Nur im Lebensmittelbereich kann es Probleme mit Rohstoffaromen geben, die erhalten bleiben sollen. Dies ist über einen Kompromiß in den Behandlungsbedingungen möglich.
-"Verkapselung" von Rohstoffkomponenten der behandelten Aufgabenmischung. Beispielsweise reagieren im Extruder Fett und Stärke so miteinander, daß das Fett mit Hilfe eines Fettlösungsmittels nicht mehr vollständig aus dem Produkt ausgewaschen werden kann. Auch visuell erscheint das Produkt fettarmer als es ist. Die Rieselfähigkeit wird verbessert, und die Handhabung dieser Produkte ist einfacher als die Handhabung nachträglich aufgefetteter Mischungen (Durchfetten von Verpackungen, Kleben).

Die eine geschlossene Produktionsweise erlaubende Vorrichtung oder Anlage weist einen Behälter 1 auf, in den der Rohstoff z.B. Körner, Bohnen oder Fischmehl, insbesondere auch eine Rohstoffmischung eingebracht wird. Vom Behälter 1 aus fördert eine Dosierschnecke 2 den Rohstoff zu einem Durchlaufmischer 3, der den Rohstoff einem Zwischenspeicher 4 zuführt. Die Vorrichtungen 1 bis 3 sind oberhalb des Zwischenspeichers 4 an diesem befestigt. Um eine gute Verteilung der Rohstoffe im Zwischenspeicher 4 zu erreichen ist im Innenraum des Speichers 4 oben im Bereich der Einführöffnung ein Verteilerteller 5 drehbar gelagert, das durch einen Motor 6 angetrieben wird und auf das das Futter fällt.

Im wärmeisolierten Zwischenspeicher 4 findet eine Langzeitvorbehandlung der Rohstoffe von 10-60 Minuten statt, wobei diese Feuchtigkeit und/oder Temperatur ausgesetzt sind. Es wird hier für eine Feuchtigkeit der Rohstoffe von 10 bis 40, insbesondere von 12 bis 30 Prozent und eine Temperatur von 30 bis 150, insbesondere von 50 bis 120 Grad Celsius gesorgt. Die erhöhte Feuchtigkeit wird dadurch erreicht, daß in den Durchlaufmischer 3 Wasserdampf oder Wasser durch eine Leitung 7 eingebracht wird. Alternativ kann der Dampf ohne das Wasser auch direkt in den Zwischenspeicher 4 eingespeist werden. Die erhöhte Temperatur im Zwischenspeicher wird durch einen Heizboden 8 erzeugt.

Eine gleichmäßige Verteilung des Futters im Speicher 4 wird weiterhin dadurch verbessert, daß mittig im Speicher ein konisches oder pyramidenförmiges Abweisblech 9 befestigt ist. Das im Speicher 4 befindliche Gut wird durch eine Schnecke 10 ausgetragen, die am Boden des Speichers angeordnet ist. Der Speicher ist damit so aufgebaut, daß das zuletzt in dem Speicher eingegangene Gut auch zuletzt ausgetragen wird. Vom Speicher 4 gelangt das Gut zu einer Dosierschnecke 12, die es über eine Stopfschnecke 13 einem Extruder 14 zuführt.

Der Extruder 14 besteht aus mehreren, im Ausführungsbeispiel aus vier Stufen, so daß die Extruderschnecke mit vier Schneckenabschnitten gegen vier Einengungen anarbeitet, die von Druckringen gebildet werden. Von Stufe zu Stufe erhöht sich der auf das Gut einwirkende Druck im Extruder. Der Durchmesser der Schnecke ist verhältnismäßig groß und beträgt mindestens 200 mm.

Am Ende der Extruderschnecke befindet sich eine Flachmatrize in einem Gehäuse 15, hinter der ein Zerhackermesser rotiert. Die vom Zerhackermesser in kleine Stücke zerteilten Rohstoffteilchen werden von einem Fördergebläse 16 über eine Rohrleitung 17 einem Zyklon 18 oben zugeführt. Das Fördergebläse 16 saugt auf der dem Extruder 14 zugewandten Seite die Luft an, so daß die auf der Außenseite des Extruders 14 befindliche und von diesem angewärmte Luft in das Fördergebläse 16 gesaugt wird. Zerhackermesser und Laufrad des Fördergebläses 16 befinden sich auf derselben angetriebenen Welle. Im Zyklon 18 findet bereits ein Trocknen des Guts statt.

Unterhalb des Zyklons 18 ist eine Trocknungs- und Kühlvorrichtung 19 befestigt, in die das Gut vom Zyklon 18 gelangt. Aus der Trockenvorrichtung 19a wird die Luft von einem Gebläse 20 angesaugt und zu einem nichtdargestellten Zyklon geführt. Ein Trocknen der in den Trockner 19a gelangenden Stoffe geschieht besonders energiesparend, da hierzu die vom Fördergebläse 16 geförderte Warmluft genutzt wird. Unterhalb des Trockners 19a befindet sich eine Kühlvorrichtung 19b und darunter ein Schieber oder eine Schnecke 21 zur Abgabe des fertigen Futters oder Lebensmittels.

## Ansprüche

1. Verfahren zum Herstellen von Tierfutter oder Lebensmitteln durch Aufschließen pflanzlicher und/oder tierischer Rohstoffe wie Körner, Bohnen oder Fischmehl, insbesondere in Futter-oder Lebensmittelmischungen unter Verwendung eines Extruders, **dadurch gekennzeichnet,** daß der pflanzliche und/oder tierische Rohstoff bei einer Feuchtigkeit von 10 bis 40, insbesondere von 12 bis 30 Prozent und einer Temperatur von 30 bis 150, insbesondere von 50 bis 120 Grad Celsius vorbehandelt, danach einem mehrstufigen Extruder (14) zugeführt wird und nach einem Zerhacken zu einer Trocknungs-und/oder Kühlsstation (18, 19) transportiert wird.

2. Verfahren nach Anspruch 1, **dadurch gekennzeichnet,** daß der Rohstoff vom Extruder - (14) zur Trocknungs-und/oder Kühlstation (18, 19) durch ein Fördergebläse (16) transportiert wird.

3. Verfahren nach Anspruch 1 oder 2, **dadurch gekennzeichnet,** daß das Fördergebläse (16) von der Extruderaußenseite erwärmte Luft ansaugt, die während des Weitertransports und insbesondere in der Trocknungsstation (18, 19a) das behandelte Gut trocknet.

4. Vorrichtung zum Durchführen des Verfahrens nach einem der Ansprüche, **dadurch gekennzeichnet,** daß alle das Verfahren ausführenden Behandlungsstationen von einer einzigen Anlage gebildet werden, die eine ununterbrochene Behandlungsstrecke aufweist.

5. Vorrichtung nach Anspruch 4, **dadurch gekennzeichnet,** daß vor dem Extruder (14) ein Zwischenspeicher (4) angeordnet ist, in den Dampf und/oder Wasser eingeführt wird.

6. Vorrichtung nach Anspruch 5, **dadurch gekennzeichnet,** daß der Zwischenspeicher (4) einen Heizboden (8) aufweist.

7. Vorrichtung nach Anspruch 5 oder 6, **dadurch gekennzeichnet,** daß dem Zwischenspeicher (4) die Rohstoffe oder Mischungen über einen Durchlaufmischer (3) aufbereitet und zugeführt werden.

8. Vorrichtung nach einem der Ansprüche 5 bis 7, **dadurch gekennzeichnet,** daß zwischen dem Extruder (14) und dem Zwischenspeicher (4) eine Dosierschnecke (2) angeordnet ist.

9. Vorrichtung nach einem der Ansprüche 4 bis 8, **dadurch gekennzeichnet,** daß dem Extruder - (14) das Gut über eine Stopfschnecke (13) zugeführt wird.

10. Vorrichtung nach einem der Ansprüche 4 bis 9, **dadurch gekennzeichnet,** daß der Extruder (14) das Gut durch eine Matritze drückt, hinter der ein Zerhackermesser rotiert.

11. Vorrichtung nach einem der Ansprüche 4 bis 10, **dadurch gekennzeichnet,** daß Gebläserad und Zerhackermesser auf derselben angetriebenen Welle befestigt sind.

12. Vorrichtung nach einem der Ansprüche 4 bis 11, **dadurch gekennzeichnet,** daß in den Extruder (14) Dampf und Wasser eingebbar ist.

13. Vorrichtung nach einem der Ansprüche 4 bis 12, **dadurch gekennzeichnet,** daß Schnecke und/oder Druckringe des Extruders (14) durch Austausch veränderbar sind.

14. Vorrichtung nach einem der vorherigen Ansprüche, **dadurch gekennzeichnet,** daß der Extruder eine Schnecke mit einem Durchmesser von 200 mm aufweist.